# EUROPEAN PATENT SPECIFICATION

(11) **EP 2 980 663 B1**
(45) Date of publication and mention of the grant of the patent: **23.08.2017**
(21) Application number: 13880017.2
(22) Date of filing: 29.03.2013
(51) Int. Cl.: G05B 19/05, G06F 1/26

(54) **PLC SYSTEM**
PLC-SYSTEM
SYSTÈME PLC

(43) Date of publication of application: 03.02.2016
(73) Proprietor: Mitsubishi Electric Corporation, Tokyo 100-8310 (JP)
(72) Inventor: KAWANA, Satoshi, Tokyo 102-0073 (JP)
(74) Representative: Diehl & Partner GbR
(86) International application number: PCT/JP2013/059606
(87) International publication number: WO 2014/155697

(56) References cited:
- DE-A1-102009 054 155
- JP-A- H0 887 307
- JP-A- S63 116 207
- JP-A- 2011 242 983
- JP-A- 2012 043 237
- JP-U- H01 172 103
- US-A1- 2011 078 481

## Description

### Field

The present invention relates to a unit-direct-connection type programmable logic controller (hereinafter, referred to as a PLC) system.

### Background

A basic block in a conventional unit-direct-connection type PLC system has a configuration in which a power supply unit is arranged at the start end, a CPU unit is connected to the power supply unit, input/output units or units having other functions are connected subsequent to the CPU unit, and an end cover or a branch unit, which is used when the system is extended, is connected at the termination end. When units are not sufficient only by providing the basic block, an extension block is used. An extension block has a configuration in which an extension unit is arranged at the start end, input/output units or units having other functions are connected subsequent to the extension unit, and an end cover or a branch unit, which is used when the system is extended, is connected at the termination end. Voltage monitoring circuits are mounted on the branch unit and the end cover in this PLC system and the units themselves monitor their own voltages (for example, see Patent Literature 1).

With the voltage monitoring circuits included in the branch unit and the end cover, the units themselves monitor the voltages supplied to the units, and the supplied voltage values and the specified value are compared. An LED (Light Emitting Diode) for indicating the voltage level by color in accordance with the comparison result is mounted on each of the branch unit and the end cover. For example, the LED can be illuminated in three colors, i.e., green, orange, and red. Flashing in green indicates that the voltage value is greatly higher than the specified value and the voltage necessary for the system to operate normally is sufficiently supplied. Flashing in orange indicates that the voltage value is slightly higher than the specified value and the voltage necessary for the system to operate normally is barely supplied. Flashing in red indicates that the voltage value is lower than the specified value and the voltage necessary for the system to operate normally is not sufficiently supplied.

With such a configuration, when the end cover present at the termination end of the basic block monitors the voltage of the end cover itself, because all the units including the power supply unit are connected by a bus connector, the voltage supplying state from the power supply unit to the end cover can be checked in accordance with the color of the LED in the voltage monitoring circuit of the end cover.

When the branch unit present at the termination end of the basic block monitors the voltage of the branch unit itself, because all the units are connected by a bus connector, the voltage supplying state from the power supply unit to the branch unit can be checked in accordance with the color of the LED in the voltage monitoring circuit of the branch unit. Alternatively, when the branch unit present at the termination end of the extension block monitors the voltage of the branch unit itself, the voltage supplying state of the block at the preceding stage can be checked in accordance with the color of the LED in the voltage monitoring circuit of the branch unit at the preceding stage. Moreover, because all the units are connected by a bus connector, the voltage supplying state from the extension unit to the branch unit can be checked in accordance with the color of the LED in the voltage monitoring circuit of the branch unit.

Furthermore, when the end cover present at the termination end of the last extension block monitors the voltage of the end cover itself, the voltage supplying state of the block at the preceding stage can be checked in accordance with the color of the LED in the voltage monitoring circuit of the branch unit at the preceding stage. Moreover, because all the units are connected by a bus connector, the voltage supplying state from the extension unit to the end cover can be checked in accordance with the color of the LED in the voltage monitoring circuit of the end cover.

### Citation List

### Patent Literature

Patent Literature 1: Japanese Patent Application Laid-open No. 2002-108417

Document US 2011/078481 A1 discloses a programmable controller, which includes a power unit for supplying an electric power to the entire system, a plurality of I/O units (extension units) having an interface conforming to a device to be controlled, a CPU unit for individually controlling each of the I/O units, and a terminal unit connected to the I/O unit at one end of the programmable controller. The power unit, the CPU unit, the I/O units and the terminal unit are electrically connected sequentially from the one at the left side to the one at the right side. The CPU unit includes a power circuit for generating a driving power source (internal electric power) from the system power source supplied via the power line, and voltage detection circuits for outputting respective specific detection signals by detecting the source voltage of the system power source. The I/O unit includes the power circuit for generating a driving power source (internal electric power) from the system power source supplied via the power line, and a voltage detection circuit (second voltage detection circuit) for detecting an output voltage of the power circuit and outputting the start-up completion signal when the output voltage reaches a predetermined reference voltage. The terminal unit is a unit for short-circuiting between a signal output terminal of the voltage detection circuit of the I/O unit at the end and a component of a signal line. In summary, this document discloses the features of the preamble of independent claim 1.

### Summary

### Technical Problem

When the PLC system is constructed, it is necessary to check whether a sufficient voltage for the system to operate normally is supplied to each unit. This is because the PLC system needs to operate only by a voltage supplied from the power supply unit of the basic block. When a system with no power supply unit in the extension block is constructed, the voltage supply to the extension block tends to become difficult because of the voltage drop through the extension cable. Because of the above reason, when a new PLC system is constructed, whether a sufficient voltage is supplied is calculated in advance. However, there is a problem in that when a used unit is changed or a unit is added, it takes time to perform calculation each time.

Moreover, there is a problem in that if the voltage supply becomes insufficient in each unit, but the cause of the system error is not known to be voltage related, it takes time to solve the system error.

Furthermore, in conventional PLC systems, it is possible to determine whether or not a sufficient voltage is supplied to the basic block and the extension block by displaying the comparison result of the voltage value supplied to the branch unit or the end cover and the specified value with the LED. However, there is a problem in that the user cannot identify which unit is not being supplied with a sufficient voltage and how many units need to be removed or changed.

Moreover, in conventional PLC systems, there is a problem in that it is difficult to determine whether the voltage supply is insufficient because of the voltage drop in the cable that connects the branch unit and the extension unit.

The present invention has been achieved in view of the above and an object of the present invention is to obtain a PLC system capable of determining the voltage supplying state in each unit from which the PLC system is configured in the PLC system in which units are directly connected.

### Solution to Problem

The above object is solved by the combination of features of independent claim 1. Preferred embodiments are defined in the dependent claims.

In order to achieve the above object, a PLC system according to an aspect of the present invention is a
PLC system that includes a basic block in which a power supply unit, a CPU unit, a first termination end unit arranged at a termination end with respect to the power supply unit, and another unit arranged between the power supply unit and the first termination end unit are connected via a connector, wherein the another unit and the first termination end unit each include a voltage measuring unit that measures a voltage value supplied to a corresponding unit and stores the voltage value, the CPU unit includes a voltage measuring unit that measures a voltage value supplied to the CPU unit and stores the voltage value, and a voltage monitoring control unit that performs a voltage value obtaining process of reading the voltage value stored in the voltage measuring unit of the first termination end unit, the another unit, or the CPU unit and determining whether the voltage value is equal to or higher than a specified value necessary for driving each unit from which the PLC system is configured and that displays a result of the voltage value obtaining process on a display unit in numerical form, and when the voltage monitoring control unit performs the voltage value obtaining process on the first termination end unit, if a voltage value of the first termination end unit is lower than the specified value, the voltage monitoring control unit performs the voltage value obtaining process on a unit in order from the first termination end unit toward the power supply unit side until a unit whose voltage value has become equal to or higher than the specified value is identified.

### Advantageous Effects of Invention

According to the present invention, the CPU unit, other units, and the end cover each include the voltage monitoring unit that measures the voltage value supplied to the corresponding unit, and the CPU unit includes the voltage monitoring control unit that compares the voltage value measured by the other units or the CPU unit with the specific voltage value necessary for operating the PLC system and displays the result on the display unit. Therefore, an effect is obtained where it is possible to easily determine whether or not the voltage supplied to each unit from which the PLC system is configured is sufficient with respect to the specified value.

### Brief Description of Drawings

FIG. 1 is a diagram schematically illustrating an example of the configuration of a PLC system according to a first embodiment.
FIG. 2 is a block diagram schematically illustrating the functional configuration of a voltage monitoring unit according to the first embodiment.
FIG. 3 is a block diagram schematically illustrating the functional configuration of a voltage monitoring control unit according to the first embodiment.
FIG. 4 is a flowchart illustrating an example of the procedure of a voltage measuring process according to the first embodiment.
FIG. 5 is a flowchart illustrating an example of the procedure of a voltage monitoring control process according to the first embodiment.
FIG. 6 is a flowchart illustrating an example of the procedure of a voltage value obtaining process in a CPU unit.
FIG. 7 is a diagram schematically illustrating an example of the configuration of a PLC system according to a second embodiment.
FIG. 8 is a flowchart illustrating an example of the procedure of the voltage monitoring control process according to the second embodiment.
FIG. 9 is a diagram schematically illustrating another example of the configuration of the PLC system.
FIG. 10 is a diagram schematically illustrating another example of the configuration of the PLC system.

### Description of Embodiments

Preferred embodiments of a PLC system according to the present invention will be explained below in detail with reference to the accompanying drawings. This invention is not limited to the embodiments.

### First Embodiment.

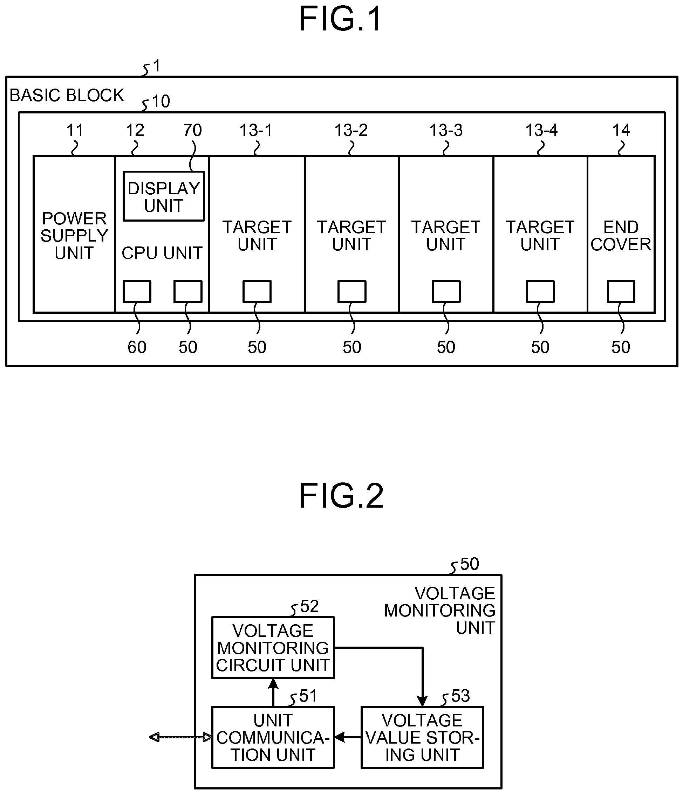

FIG. 1 is a diagram schematically illustrating an example of the configuration of a PLC system according to a first embodiment. A PLC system 1 has a unit-direct-connection type configuration and includes one basic block 10. The basic block 10 includes a power supply unit 11 that supplies power to each unit, a CPU unit 12 that controls the entire system, target units 13-1 to 13-4 that are input/output units or other units having other functions, and an end cover 14 that indicates a block terminal and that is a termination end unit that terminates the block. All the units (including the end cover 14) are connected together by a bus (bus connector). With this bus, the units can communicate with each other and a voltage is supplied from the power supply unit 11 to other units. In this example, a case is illustrated where four target units 13-1 to 13-4 are arranged; however, this is not a limitation.

In the first embodiment, the CPU unit 12 includes a voltage monitoring unit 50 that monitors the voltage supplied to the CPU unit 12 and a voltage monitoring control unit 60 that controls the voltage supplied to each of the units (the CPU unit 12, the target units 13-1 to 13-4, and the end cover 14) from which the PLC system 1 (the basic block 10 in the first embodiment) is configured. The CPU unit 12 can monitor the voltage value of the PLC system 1 by using a display unit 70 attached to the CPU unit 12. The target units 13-1 to 13-4 and the end cover 14 each include the voltage monitoring unit 50 that monitors the voltage supplied to the corresponding unit.

FIG. 2 is a block diagram schematically illustrating the functional configuration of the voltage monitoring unit according to the first embodiment. The voltage monitoring unit 50 includes a unit communication unit 51, a voltage monitoring circuit unit 52, and a voltage value storing unit 53. The unit communication unit 51 has a function of causing each unit to perform communication with other units via a connector, such as a bus connector. The voltage monitoring circuit unit 52 measures the voltage value supplied to each unit. The voltage value storing unit 53 stores the voltage value measured by the voltage monitoring circuit unit 52.

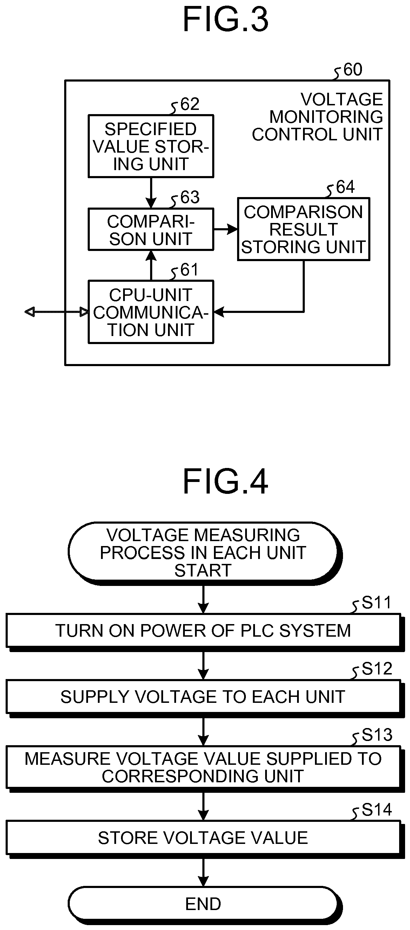

FIG. 3 is a block diagram schematically illustrating the functional configuration of the voltage monitoring control unit according to the first embodiment. The voltage monitoring control unit 60 includes a CPU-unit communication unit 61, a specified value storing unit 62, a comparison unit 63, and a comparison result storing unit 64. The CPU-unit communication unit 61 transmits information between the voltage monitoring control unit 60 and other units. The specified value storing unit 62 stores the specified value, which is a reference for determining whether or not the voltage supplied to the CPU unit 12 or other units (the target units 13-1 to 13-4 and the end cover 14) is sufficient.

The comparison unit 63 compares the voltage value transmitted from other units or the voltage monitoring unit 50 of the CPU unit 12 with the specified value stored in the specified value storing unit 62 and writes the result in the comparison result storing unit 64. When the voltage value is lower than the specified value, the comparison unit 63 performs a process of reading a voltage value of an adjacent unit that is arranged next (attached) to the unit that is being currently compared on the power supply unit 11 side. The comparison result storing unit 64 stores the result of comparison between the voltage value of a certain unit and the specified value performed by the comparison unit 63.

Next, an explanation will be given of a voltage measuring process and a voltage monitoring control process performed in the PLC system 1 having such a configuration. FIG. 4 is a flowchart illustrating an example of the procedure of the voltage measuring process according to the first embodiment.

First, when the power of the PLC system 1 is turned on (Step S11), the power supply unit 11 supplies a voltage to each unit via a connector, such as a bus connector, that connects the units (Step S12). When a voltage is supplied to each unit, the unit communication unit 51 becomes communicable.

Next, the voltage monitoring circuit unit 52 of the voltage monitoring unit 50 of each unit measures the voltage value supplied to the corresponding unit (Step S13). Thereafter, the voltage value storing unit 53 stores the measured voltage value of the corresponding unit (Step S14). With the above procedure, the voltage measuring process in each unit ends.

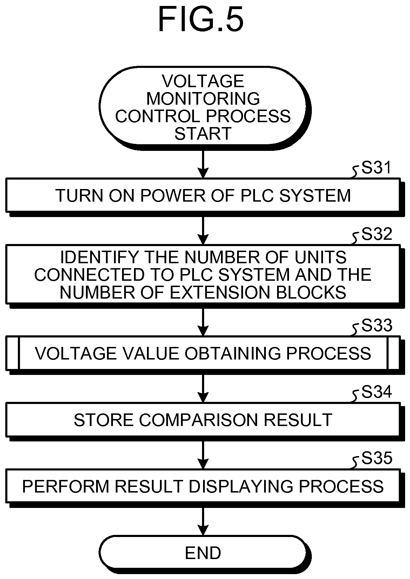

FIG. 5 is a flowchart illustrating an example of the procedure of the voltage monitoring control process according to the first embodiment. First, when the power of the PLC system 1 is turned on (Step S31), the power supply unit 11 supplies a voltage to each unit via a connector, such as a bus connector, that connects the units, whereby the system is run. Next, the CPU unit 12 performs a process of identifying the number of units connected to the direct-connection type PLC system 1 by bus access and the number of extension blocks (Step S32). For example, the CPU unit 12 obtains the arrangement state of the units in the basic block 10 of the PLC system 1. In this example, a case is exemplified where there is no extension block and there is only the basic block 10.

Next, the CPU unit 12 of the basic block 10 performs a voltage value obtaining process of obtaining, by using the bus that connects the units, the position of a unit whose supplied voltage has become lower than the specified value (Step S33).

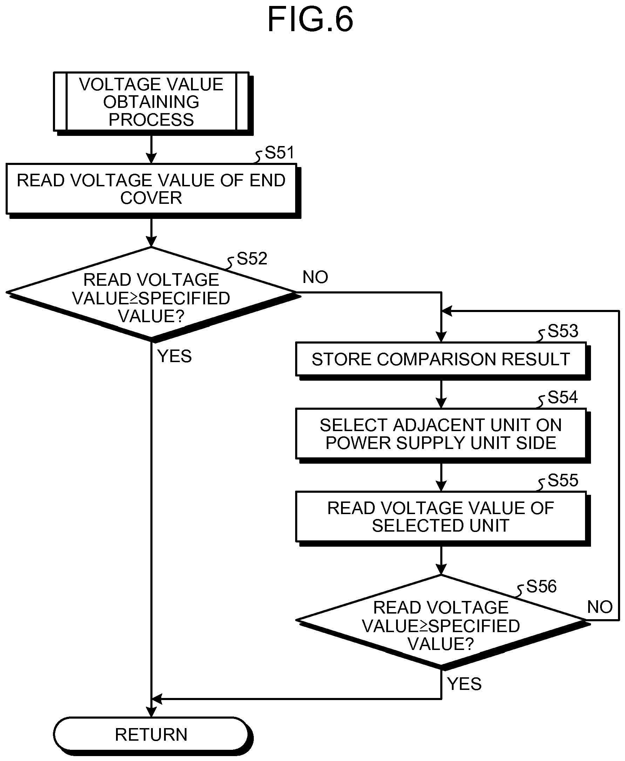

FIG. 6 is a flowchart illustrating an example of the procedure of the voltage value obtaining process in the CPU unit. In the voltage value obtaining process, the CPU-unit communication unit 61 of the voltage monitoring control unit 60 reads the voltage value of the voltage monitoring unit 50 incorporated in the end cover 14 by using the bus that connects the units (Step S51). This is performed, for example, by a method of transmitting a request to read the voltage value from the CPU unit 12 to the end cover 14 and then transmitting the voltage value stored in the voltage value storing unit 53 to the CPU unit 12 from the unit communication unit 51 of the end cover 14 in response to the request.

Next, the comparison unit 63 of the voltage monitoring control unit 60 compares the read voltage value of the end cover 14 with the specified value that is stored in the specified value storing unit 62 and that is a specific voltage value necessary for operating the PLC system 1 (Step S52). Specifically, the comparison unit 63 determines whether the read voltage value is equal to or higher than the specified value.

When the voltage value is lower than the specified value (No at Step S52), the comparison unit 63 stores the comparison result in the comparison result storing unit 64 (Step S53). For example, the compared voltage value is stored in association with the end cover 14.

Thereafter, the comparison unit 63 selects one unit arranged adjacent to the end cover 14 on the power supply unit 11 side (Step S54) and reads the voltage value of the selected unit via the CPU-unit communication unit 61 (Step S55).

Next, the comparison unit 63 compares the read voltage value of the unit with the specified value stored in the specified value storing unit 62 and determines whether the read voltage value is equal to or higher than the specified value (Step S56).

When the voltage value is equal to or higher than the specified value (Yes at Step S56) or when the voltage value of the end cover 14 is equal to or higher than the specified value at Step S52 (Yes at Step S52), the voltage value obtaining process ends.

When the voltage value is lower than the specified value at Step S56 (No at Step S56), the process returns to Step S53. Then, the process of Steps S53 to S56 is repeated until the unit whose read voltage value has become equal to or higher than the specified value is obtained.

Here the description refers back to FIG. 5. When the voltage value read at Step S52 or Step S56 in the voltage value obtaining process is equal to or higher than the specified value, the comparison unit 63 stores the voltage value in the comparison result storing unit 64 in association with the unit or the end cover 14 (Step S34). Thereafter, the comparison unit 63 performs, via the CPU-unit communication unit 61, a result displaying process of displaying the result stored in the comparison result storing unit 64 on the display unit 70 in numerical form (Step S35).

When the result displaying process is performed, there are two cases that the content stored in the comparison result storing unit 64 is considered to be, i.e., (1) a case where the voltage value of the end cover 14 is equal to or higher than the specified value and (2) a case where the voltage value of the end cover 14 is lower than the specified value.
(1) A case where the voltage value of the end cover 14 is equal to or higher than the specified value
   In this case, the comparison result storing unit 64 stores only the voltage value of the end cover 14. Therefore, the display unit 70 performs a process of displaying an indication that the voltage value of the end cover 14 is equal to or higher than the specified value.
(2) A case where the voltage value of the end cover 14 is lower than the specified value
   In this case, the comparison result storing unit 64 stores the voltage values from the end cover 14 to the unit whose voltage value has becomes equal to or higher than the specified value (the target units 13-1 to 13-4 or the CPU unit 12). Therefore, the display unit 70 performs a process of displaying an indication that the unit whose voltage value has becomes equal to or higher than the specified value has a voltage value equal to or higher than the specified value and an indication that the voltage values from the end cover 14 to a unit adjacent the unit on the end cover 14 side are lower than the specified value.

The displaying in the cases (1) and (2) can be performed, for example, by a method of drawing a schematic configuration diagram of the PLC system 1 as illustrated in FIG. 1 on the display unit 70 and displaying the voltage values or the specified value in addition to the voltage values up to the unit whose voltage value is measured from the end cover 14 side in the schematic configuration diagram. At this point, a voltage value below the specified value may be displayed by a method, such as bold display, display with a different color, flashing, or display with a different size, in order to alert the user who is observing the display unit 70. With the above procedure, the voltage monitoring control process ends.

In the first embodiment, the CPU unit 12, the target units 13-1 to 13-4, and the end cover 14 of the basic block 10 of the PLC system 1 each include the voltage monitoring unit 50 that measures the voltage value supplied to the corresponding unit. Moreover, the CPU unit 12 performs the voltage value obtaining process of comparing the voltage value measured by the end cover 14 with the specific voltage value necessary for operating the PLC system 1 and, if the measured voltage value is lower than the specific voltage value, comparing the specified value with the voltage value measured in an adjacent unit on the power supply unit 11 side until a unit whose measured voltage value has become equal to or higher than the specified value appears, stores the comparison result, and displays the comparison result on the display unit 70. Consequently, an effect is obtained where the voltage supplied to the unit itself can be monitored and the user can easily identify the unit that is supplied with a sufficient voltage and the unit that is not supplied with a sufficient voltage.

For example, when the CPU unit 12 reads the voltage value of the end cover 14, if a numerical value equal to or higher than the specified value is written in the voltage value storing unit 53 of the voltage monitoring unit 50, it is possible to determine that a sufficient voltage is supplied along the route up to the end cover 14. Moreover, when the CPU unit 12 reads the voltage value of the end cover 14, if a numerical value equal to or lower than the specified value is written in the voltage value storing unit 53 of the voltage monitoring unit 50, the voltage value of each unit is read in order starting from the unit next to the end cover 14. When the voltage value of a unit is equal to or higher than the specified value in the comparison unit 63 of the voltage monitoring control unit 60 of the CPU unit 12, it is possible to determine that a sufficient voltage is supplied up to that unit from the power supply unit 11.

Moreover, when a used unit is changed or a unit is added, it is possible to determine whether or not the voltage value supplied to each unit is equal to or higher than the specified value; therefore, it is possible to identify whether the system is operating normally without calculating the voltage each time. Furthermore, the voltage supplying state is not indicated by the color of an LED but the voltage value and the specified value are displayed for each unit in numerical form; therefore, it is possible to determine whether a voltage is insufficient in each unit and thus the user can easily determine how many units need to be removed or how many units need to be changed. Furthermore, the voltage monitoring unit 50 is mounted not only on the end cover 14 but also on each unit and thus it is possible to determine whether the voltage value supplied to each unit is equal to or higher than the specified value. Accordingly, it is possible to determine which unit is not being supplied with a sufficient voltage. Consequently, an effect is obtained where the number of man-hours for system construction and maintenance is reduced.

Furthermore, if the voltage supply becomes insufficient in each unit, it is possible to determine whether or not the voltage value supplied to each unit is equal to or higher than the specified value; therefore, for example, when a system error occurs, the user can quickly determine whether the cause is the voltage supply. Consequently, an effect is obtained where the time required for solving the cause of the system error can be reduced.

### Second Embodiment.

The first embodiment describes a case where the PLC system is configured from only a basic block. The second embodiment describes a case where the PLC system is configured from a basic block and an extension block.

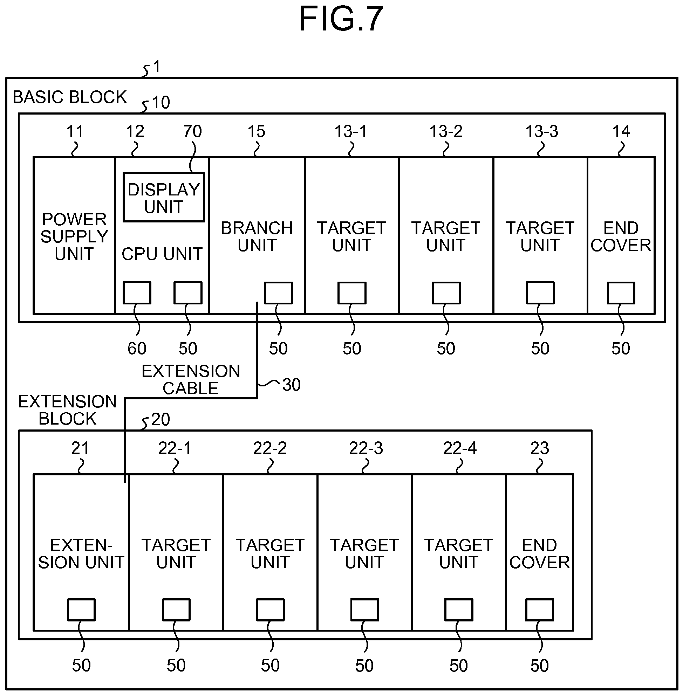

FIG. 7 is a diagram schematically illustrating an example of the configuration of the PLC system according to the second embodiment. The PLC system 1 includes one basic block 10 and an extension block 20 that is connected to the basic block 10 via an extension cable 30.

The basic block 10 includes the power supply unit 11, the CPU unit 12, the target units 13-1 to 13-3, the end cover 14, and a branch unit 15. The branch unit 15 is provided when a block other than the basic block 10 is additionally provided and is provided at a given position between the CPU unit 12 and the end cover 14. The branch unit 15 includes the voltage monitoring unit 50 explained in the first embodiment.

The extension block 20 functions as the connecting component for the voltage to be supplied from the power supply unit 11 to the extension block 20 and includes an extension unit 21, which is the start end, target units 22-1 to 22-4, and an end cover 23, which is the termination end. The extension unit 21 includes the voltage monitoring unit 50 explained in the first embodiment.

The branch unit 15 of the basic block 10 and the extension unit 21 of the extension block 20 are connected by the extension cable 30. With the extension cable 30, the voltage supply from the power supply unit 11 of the basic block 10 and communication can be performed. An explanation of the components that are the same as those in the first embodiment is omitted.

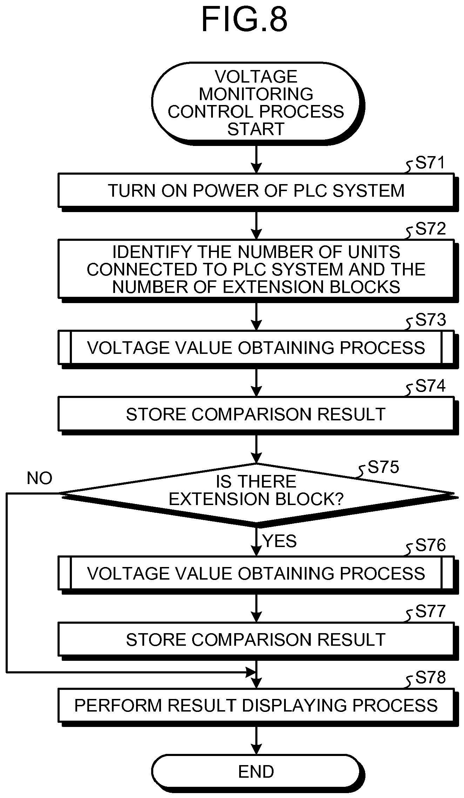

Next, an explanation will be given of the voltage monitoring control process performed in the PLC system 1 having such a configuration. FIG. 8 is a flowchart illustrating an example of the procedure of the voltage monitoring control process according to the second embodiment. First, when the power of the PLC system 1 is turned on (Step S71), the power supply unit 11 supplies a voltage to each of the units (the CPU unit 12, the branch unit 15, the target units 13-1 to 13-3, and the end cover 14) of the basic block 10 via a connector, such as a bus connector, that connects the units and supplies a voltage to each of the units (the extension unit 21, the target units 22-1 to 22-4, and the end cover 23) of the extension block 20 connected to the branch unit 15 via the extension cable 30, whereby the system is run. Next, the CPU unit 12 performs a process of identifying the number of units connected to the direct-connection type PLC system 1 by bus access and the number of extension blocks (Step S72).

Next, the comparison unit 63 of the voltage monitoring control unit 60 performs the voltage value obtaining process of obtaining, by using the bus that connects the units, the position of a unit whose supplied voltage has become lower than the specified value in the basic block 10 (Step S73). This voltage value obtaining process corresponds to the process illustrated in FIG. 6 performed on the basic block 10.

Thereafter, when the voltage value read at Step S52 or Step S56 in the voltage value obtaining process is equal to or higher than the specified value, the comparison unit 63 stores the voltage value in the comparison result storing unit 64 in association with the unit or the end cover 14 (Step S74).

Next, the comparison unit 63 determines whether the extension block 20 is connected to the basic block 10 (Step S75). When the extension block 20 is not connected to the basic block 10 (No at Step S75), this is the same as the case of the first embodiment. The comparison unit 63 performs, via the CPU-unit communication unit 61, the result displaying process of displaying the result stored in the comparison result storing unit 64 on the display unit 70 (Step S78).

In contrast, when the extension block 20 is connected to the basic block 10 (Yes at Step S75), the comparison unit 63 performs the voltage value obtaining process of obtaining, by using the bus that connects the units and the extension cable 30 that connects the blocks, the position of a unit whose supplied voltage has become lower than the specified value in the extension block 20 (Step S76). This voltage value obtaining process corresponds to the process illustrated in FIG. 6 performed on the extension block 20.

Thereafter, when the voltage value read at Step S52 or Step S56 in the voltage value obtaining process in the extension block 20 is equal to or higher than the specified value, the comparison unit 63 stores the voltage value in the comparison result storing unit 64 in association with the unit or the end cover 23 (Step S77). Next, the comparison unit 63 performs, via the CPU-unit communication unit 61, the result displaying process of displaying the result stored in the comparison result storing unit 64 on the display unit 70 (Step S78). The result can be displayed by a method similar to the method in the first embodiment. With the above procedure, the voltage monitoring control process ends.

FIG. 7 illustrates a case where one extension block 20 is connected to the basic block 10; however, two or more extension blocks may be connected. When an additional extension block is provided, it is satisfactory if the extension block 20 is provided with a branch unit, the additional extension block is provided with an extension unit, and the branch unit of the extension block 20 and the extension unit of the additional extension block are connected by an extension cable. In this case, the end cover 23 (termination end unit) is provided at each termination end of the extension block 20 and the additional extension block. Moreover, the number of the target units 13-1 to 13-3 in the basic block 10 and the number of the target units 22-1 to 22-4 in the extension block 20 in FIG. 7 are only examples and the number thereof is not limited thereto.

In the second embodiment, in the PLC system 1 in which the extension block 20 is additionally provided to the basic block 10 via the extension cable 30, each unit includes the voltage monitoring unit 50 and the CPU unit 12 obtains the voltage values measured by the voltage monitoring units 50. Accordingly, in a similar manner to the first embodiment, an effect is obtained where the user can visually identify the unit that is supplied with a sufficient voltage and the unit that is not supplied with a sufficient voltage. Particularly, it is possible to determine whether the voltage supply is insufficient because of the voltage drop in the cable that connects the branch unit 15 and the extension unit 21.

The voltage monitoring unit 50 is mounted not only on the branch unit 15 and the end cover 14 but also on each unit and thus it is possible to determine whether the voltage value supplied to each unit is equal to or higher than the specified value. Accordingly, the user can easily identify which unit is not being supplied with a sufficient voltage. Consequently, the number of man-hours for system construction and maintenance can be reduced.

In the above first and second embodiments, when the PLC system 1 is run, each unit measures a voltage value, the voltage monitoring control unit 60 of the CPU unit 12 reads the result, and the result is displayed; however, it is not limited thereto. Measurement of the voltage value of each unit and displaying of the result can be performed at any given point in time.

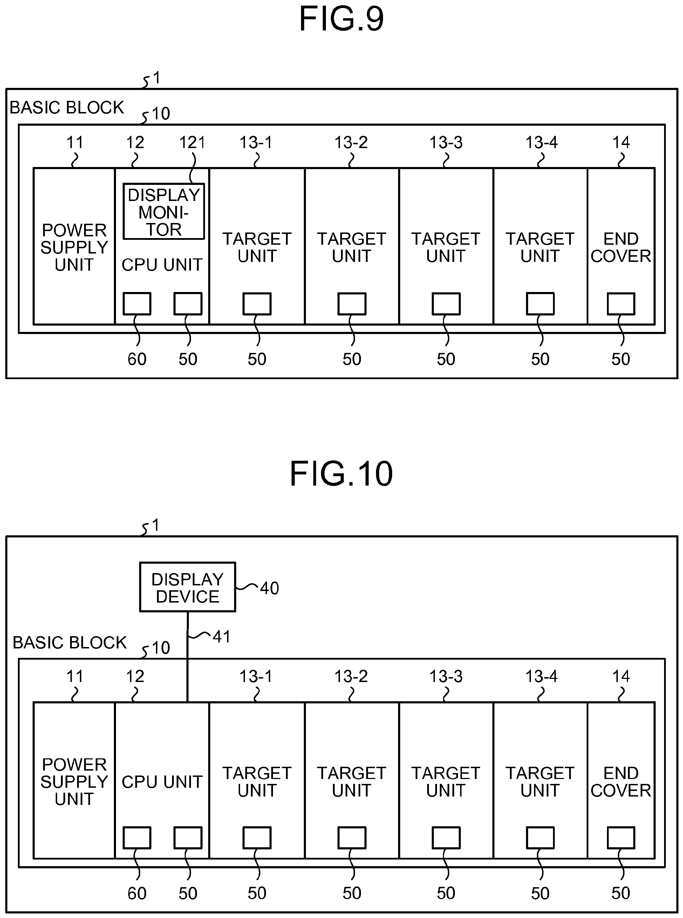

In the above embodiments, the display unit 70 is attached to the CPU unit 12; however, it is not limited thereto. FIG. 9 is a diagram schematically illustrating another example of the configuration of the PLC system. This PLC system 1 includes the CPU unit 12 incorporating a display monitor 121 (display function). The CPU unit 12 displays the obtained voltage value and the specified value on the display monitor 121.

FIG. 10 is a diagram schematically illustrating another example of the configuration of the PLC system. This PLC system 1 has a configuration in a case where the CPU unit 12 is provided with neither the display unit 70 nor the display monitor 121 and the voltage value is displayed by a unit other than the CPU unit 12. In this case, a display device 40 that is connected to the CPU unit 12 via a cable 41 displays a voltage value and the specified value.

In the above explanation, the comparison result storing unit 64 stores the voltage values of each block as a comparison result and the voltage values of each block can be displayed on the display unit (the display unit 70 in the case of FIG. 7, the display monitor 121 in the case of FIG. 9, and the display device 40 in the case of FIG. 10).

### Industrial Applicability

As described above, the PLC system according to the present invention is useful for a unit-direct-connection type PLC system.

### Reference Signs List

1 PLC system, 10 basic block, 11 power supply unit, 12 CPU unit, 13-1 to 13-4, 22-1 to 22-4 target unit, 14, 23 end cover, 15 branch unit, 20 extension block, 21 extension unit, 30 extension cable, 40 display device, 41 cable, 50 voltage monitoring unit, 51 unit communication unit, 52 voltage monitoring circuit unit, 53 voltage value storing unit, 60 voltage monitoring control unit, 61 CPU-unit communication unit, 62 specified value storing unit, 63 comparison unit, 64 comparison result storing unit, 70 display unit, 121 display monitor.

## Claims

1. A PLC system (1) that includes a basic block (10) in which a power supply unit (11), a CPU unit (12), a first termination end unit (14) arranged at a termination end with respect to the power supply unit (11), and a first other unit (13-1 to 13-4) arranged between the power supply unit (11) and the first termination end unit (14) are connected via a connector, wherein
the first other unit (13-1 to 13-4) includes a voltage measuring unit (50) that is adapted to measure a voltage value supplied to the first other unit (13-1 to 13-4) and to store the voltage value, and
the CPU unit (12) includes a voltage measuring unit (50) that is adapted to measure a voltage value supplied to the CPU unit (12) and to store the voltage value,
**characterized in that**
the first termination end unit (14) includes a voltage measuring unit (50) that is adapted to measure a voltage value supplied to the first termination end unit (14) and to store the voltage value,
the CPU unit (12) further includes a voltage monitoring control unit (60) that is adapted to perform a voltage value obtaining process of reading the voltage value stored in the voltage measuring unit (50) of the first termination end unit (14), the first other unit (13-1 to 13-4), or the CPU unit (12) and determining whether the voltage value is equal to or higher than a specified value necessary for driving each unit from which the PLC system (1) is configured and that is adapted to display a result of the voltage value obtaining process on a display unit (70) in numerical form, and
when the voltage monitoring control unit (60) performs the voltage value obtaining process on the first termination end unit (14), if a voltage value of the first termination end unit (14) is lower than the specified value, the voltage monitoring control unit (60) is adapted to perform the voltage value obtaining process on a unit in order from the first termination end unit (14) toward the power supply unit side until a unit whose voltage value has become equal to or higher than the specified value is identified.

2. The PLC system (1) according to claim 1, further comprising a first extension block (20) that is electrically connected to the basic block (10) via a first extension cable (30), wherein
the basic block further includes a first branch unit (15) arranged between the power supply unit (11) and the first termination end unit (14),
the first extension block (20) is such that a first extension unit (21) connected to the first branch unit (15) of the basic block via the first extension cable, a second termination end unit (23) arranged at a termination end with respect to the first extension unit (21), and a second other unit (22-1 to 22-4) arranged between the first extension unit (21) and the second termination end unit (23) are connected via a connector,
the first extension unit (21), the second termination end unit (23), and the second other unit (22-1 to 22-4) each include a voltage measuring unit (50) that is adapted to measure a voltage value supplied to a corresponding unit and to store the voltage value,
in the voltage value obtaining process performed by the voltage monitoring control unit (60), the voltage monitoring control unit (60) is adapted to read the voltage value stored in the voltage measuring unit (50) of the first termination end unit (14), the first other unit (13-1 to 13-4), the CPU unit (12), the first extension unit (21), the second termination end unit (23), or the second other unit (22-1 to 22-4) and to determine whether the voltage value is equal to or higher than a specified value necessary for driving each unit from which the PLC system (1) is configured, and
the voltage monitoring control unit (60) further has a function of performing the voltage value obtaining process on the second termination end unit (23) and, if a voltage value of the second termination end unit (23) is lower than the specified value, performing the voltage value obtaining process on a unit in order from the second termination end unit (23) toward the first extension unit side until a unit whose voltage value has become equal to or higher than the specified value is identified.

3. The PLC system (1) according to claim 2, further comprising a second extension block that is electrically connected to the first extension block (20) via a second extension cable, wherein
the first extension block (20) further includes a second branch unit,
the second extension block is such that a second extension unit connected to the second branch unit of the first extension block (20) via the second extension cable, a third termination end unit arranged at a termination end with respect to the second extension unit, and a third other unit arranged between the second extension unit and the third termination end unit are connected via a connector,
the second extension unit, the third termination end unit, and the third other unit each include a voltage measuring unit (50) that is adapted to measure a voltage value supplied to a corresponding unit and to store the voltage value,
in the voltage value obtaining process performed by the voltage monitoring control unit (60), the voltage monitoring control unit (60) is adapted to read the voltage value stored in the voltage measuring unit (50) of the first termination end unit, the first other unit (13-1 to 13-4), the CPU unit (12), the first extension unit (21), the second termination end unit, the second other unit (22-1 to 22-4), the second extension unit, the third termination end unit, or the third other unit and to determine whether the voltage value is equal to or higher than a specified value necessary for driving each unit from which the PLC system (1) is configured, and
the voltage monitoring control unit (60) further has a function of performing the voltage value obtaining process on the third termination end unit and, if a voltage value of the third termination end unit is lower than the specified value, performing the voltage value obtaining process on a unit in order from the third termination end unit toward the second extension unit side until a unit whose voltage value has become equal to or higher than the specified value is identified.

4. The PLC system (1) according to claim 1, wherein
the voltage measuring unit (50) is adapted to perform a measuring process of measuring a voltage value supplied to each unit when a power of the PLC system (1) is turned on, and
the voltage monitoring control unit (60) is adapted to perform the voltage value obtaining process when the power of the PLC system (1) is turned on.

5. The PLC system (1) according to claim 1, wherein
the voltage measuring unit (50) is adapted to perform a measuring process of measuring a voltage value supplied to each unit at any given point in time, and
the voltage monitoring control unit (60) is adapted to perform the voltage value obtaining process at any given point in time.

6. The PLC system (1) according to any one of claims 1 to 5, wherein the display unit is a display unit (70) attached to the CPU unit (12), a display device (121) incorporated in the CPU unit (12), or a display device (40) connected to the CPU unit (12) via a cable (41).

## Patentansprüche

1. SPS-System (1) welches einen Basisblock (10) aufweist, in welchem eine Stromversorgungs-Einheit (11), eine CPU-Einheit (12), eine bezogen auf die Stromversorgungs-Einheit (11) an einem Abschlussende angeordnet erste Abschlussende-Einheit (14) und eine zwischen der Stromversorgungs-Einheit (11) und der ersten Abschlussende-Einheit (14) angeordnete erste andere Einheit (13-1 bis 13-4) über einen Verbinder verbunden sind, wobei
die erste andere Einheit (13-1 bis 13-4) eine Spannungsmess-Einheit (50) umfasst, welche dazu ausgebildet ist, einen der ersten anderen Einheit (13-1 bis 13-4) zugeführten Spannungswert zu messen und den Spannungswert zu speichern, und
die CPU-Einheit (12) eine Spannungsmess-Einheit (50) umfasst, welche dazu ausgebildet ist, einen der CPU-Einheit (12) zugeführten Spannungswert zu messen und den Spannungswert zu speichern,
**dadurch gekennzeichnet, dass**
die erste Abschlussende-Einheit (14) eine Spannungsmess-Einheit (50) umfasst, welche dazu ausgebildet ist, einen der ersten Abschlussende-Einheit (14) zugeführten Spannungswert zu messen und den Spannungswert zu speichern, die CPU-Einheit (12) weiter eine Spannungsüberwach-Steuereinheit (60) umfasst, welche dazu ausgebildet ist, einen Spannungswert-Erhalten-Vorgang eines Lesens des in der Spannungsmess-Einheit (50) von der ersten Abschlussende-Einheit (14), der ersten anderen Einheit (13-1 bis 13-4) oder der CPU-Einheit (12) gespeicherten Spannungswertes und eines Bestimmens, ob der Spannungswert gleich oder höher als ein Vorgabewert ist, welcher erforderlich ist, um jede der Einheiten, aus welchen das SPS-System (1) aufgebaut ist, zu betreiben, und welche dazu ausgebildet ist, ein Ergebnis des Spannungswert-Erhalten-Vorgangs in numerischer Form auf einer Anzeige-Einheit (70) anzuzeigen,
und die Spannungsüberwach-Steuereinheit (60) dazu ausgebildet ist, den Spannungswert-Erhalten-Vorgang, wenn die Spannungsüberwach-Steuereinheit (60) den Spannungswert-Erhalten-Vorgang bezogen auf die erste Abschlussende-Einheit (14) durchführt, einheitenweise in einer Reihenfolge beginnend mit der ersten Abschlussende-Einheit (14) hin zu der Stromversorgungs-Einheit (11) durchzuführen, falls ein Spannungswert der ersten Abschlussende-Einheit (14) niedriger als der Vorgabewert ist, bis eine Einheit identifiziert wurde, deren Spannungswert gleich oder größer dem Vorgabewert ist.

2. SPS-System (1) nach Anspruch 1, weiter aufweisend einen ersten Erweiterungsblock (20), der über eine erste Erweiterungsleitung (30) elektrisch mit dem ersten Basisblock (10) verbunden ist, wobei
der Basisblock weiter eine zwischen der Stromversorgungs-Einheit (11) und der ersten Abschlussende-Einheit (14) angeordnete erste Abzweig-Einheit (15) aufweist,
in dem ersten Erweiterungsblock (20) eine erste Erweiterungs-Einheit (21), welche über die erste Erweiterungsleitung mit der ersten Abzweig-Einheit (15) des Basisblocks verbunden ist, eine bezogen auf die erste Erweiterungs-Einheit (21) an einem Abschlussende angeordnet zweite Abschlussende-Einheit (23) und eine zwischen der ersten Erweiterungs-Einheit (21) und der zweiten Abschlussende-Einheit (23) angeordnete zweite andere Einheit (22-1 bis 22-4) über einen Verbinder verbunden sind,
die erste Erweiterungs-Einheit (21), die zweite Abschlussende-Einheit (23) und die zweite andere Einheit (22-1 bis 22-4) jeweils eine Spannungsmess-Einheit (50) umfassen, welche dazu ausgebildet ist, einen einer zugehörigen Einheit zugeführten Spannungswert zu messen und den Spannungswert zu speichern, die Spannungsüberwach-Steuereinheit (60) dazu ausgebildet ist, im Rahmen des durch die Spannungsüberwach-Steuereinheit (60) ausgeführten Spannungswert-Erhalten-Vorgangs die in der Spannungsmess-Einheit (50) von der ersten Abschlussende-Einheit (14), der ersten anderen Einheit (13-1 bis 13-4), der CPU-Einheit (12), der ersten Erweiterungs-Einheit (21), der zweiten Abschlussende-Einheit (23) oder der zweiten anderen Einheit (22-1 bis 22-4) gespeicherten Spannungswerte zu lesen und zu bestimmen, ob der Spannungswert gleich oder höher als ein Vorgabewert ist, welcher erforderlich ist, um jede der Einheiten, aus welchen das SPS-System (1) aufgebaut ist, zu betreiben, und
die Spannungsüberwach-Steuereinheit (60) weiter eine Funktionalität aufweist, den Spannungswert-Erhalten-Vorgang bezogen auf die zweite Abschlussende-Einheit (23) durchzuführen, und, falls ein Spannungswert der zweiten Abschlussende-Einheit (23) niedriger als der Vorgabewert ist, den Spannungswert-Erhalten-Vorgang einheitenweise in einer Reihenfolge beginnend mit der zweiten Abschlussende-Einheit (23) hin zu der Seite der ersten Erweiterungs-Einheit (21) durchzuführen, bis eine Einheit identifiziert wurde, deren Spannungswert gleich oder größer dem Vorgabewert ist.

3. SPS-System (1) nach Anspruch 2, weiter aufweisend einen zweiten Erweiterungsblock, der über eine zweite Erweiterungsleitung elektrisch mit dem ersten Erweiterungsblock (20) verbunden ist, wobei
der erste Erweiterungsblock (20) weiter eine zweite Abzweig-Einheit aufweist, in dem zweiten Erweiterungsblock eine zweite Erweiterungs-Einheit, welche über die zweite Erweiterungsleitung mit der zweiten Abzweig-Einheit des ersten Erweiterungsblock (20) verbunden ist, eine bezogen auf die zweite Erweiterungs-Einheit an einem Abschlussende angeordnete dritte Abschlussende-Einheit und eine zwischen der zweiten Erweiterungs-Einheit und der dritten Abschlussende-Einheit angeordnete dritte andere Einheit über einen Verbinder verbunden sind, die zweite Erweiterungs-Einheit, die dritte Abschlussende-Einheit und die dritte andere Einheit jeweils eine Spannungsmess-Einheit (50) umfassen, welche dazu ausgebildet ist, einen einer zugehörigen Einheit zugeführten Spannungswert zu messen und den Spannungswert zu speichern,
die Spannungsüberwach-Steuereinheit (60) im Rahmen des durch die Spannungsüberwach-Steuereinheit (60) ausgeführten Spannungswert-Erhalten-Vorgangs dazu ausgebildet ist, die in der Spannungsmess-Einheit (50) von der ersten Abschlussende-Einheit, der ersten anderen Einheit (13-1 bis 13-4), der CPU-Einheit (12), der ersten Erweiterungs-Einheit (21), der zweiten Abschlussende-Einheit, der zweiten anderen Einheit (22-1 bis 22-4), der zweiten Erweiterungs-Einheit, der dritten Abschlussende-Einheit oder der dritten anderen Einheit gespeicherten Spannungswerte zu lesen und zu bestimmen, ob der Spannungswert gleich oder höher als ein Vorgabewert ist, welcher erforderlich ist, um jede der Einheiten, aus welchen das SPS-System (1) aufgebaut ist, zu betreiben, und
die Spannungsüberwach-Steuereinheit (60) weiter eine Funktionalität aufweist, den Spannungswert-Erhalten-Vorgang bezogen auf die dritte Abschlussende-Einheit durchzuführen, und, falls ein Spannungswert der dritten Abschlussende-Einheit niedriger als der Vorgabewert ist, den Spannungswert-Erhalten-Vorgang einheitenweise in einer Reihenfolge beginnend mit der dritten Abschlussende-Einheit hin zu der Seite der zweiten Erweiterungs-Einheit durchzuführen, bis eine Einheit identifiziert wurde, deren Spannungswert gleich oder größer dem Vorgabewert ist.

4. SPS-System (1) nach Anspruch 1, wobei
die Spannungsmess-Einheit (50) dazu ausgebildet ist, einen Messvorgang eines Messens eines zu jeder Einheit zugeführten Spannungswertes durchzuführen, wenn ein Strom des SPS-Systems (1) angeschaltet wird, und
die Spannungsüberwach-Steuereinheit (60) dazu ausgebildet ist, den Spannungswert-Erhalten-Vorgang durchzuführen, wenn der Strom des SPS-Systems (1) angeschaltet wird.

5. SPS-System (1) nach Anspruch 1, wobei
die Spannungsmess-Einheit (50) dazu ausgebildet ist, einen Messvorgang eines Messens eines zu jeder Einheit zugeführten Spannungswertes zu jedem beliebigen Zeitpunkt durchzuführen, und
die Spannungsüberwach-Steuereinheit (60) dazu ausgebildet ist, den Spannungswert-Erhalten-Vorgang zu jedem beliebigen Zeitpunkt durchzuführen.

6. SPS-System (1) nach einem der Ansprüche 1 bis 5, wobei die Anzeige-Einheit eine an der CPU-Einheit (12) befestigte Anzeige-Einheit (70), eine in die CPU-Einheit (12) eingebaute Anzeige-Einheit (70), oder eine über eine Leitung (41) mit der CPU-Einheit (12) verbundene Anzeige-Einheit (70) ist.

## Revendications

1. Système PLC (1) qui inclut un bloc de base (10) dans lequel une unité d'alimentation en courant (11), une unité CPU (12), une première unité d'extrémité de ter-minaison (14) agencée sur une extrémité de terminaison par rapport à l'unité d'alimentation en courant (11), et une première autre unité (13-1 à 13-4) agencée entre l'unité d'alimentation en courant (11) et la première unité d'extrémité de terminaison (14) sont connectées via un connecteur, dans lequel la première autre unité (13-1 à 13-4) inclut une unité de mesure de tension (50) qui est adaptée pour mesurer une va-leur de tension fournie à la première autre unité (13-1 à 13-4) et pour stocker la valeur de tension, et
l'unité CPU (12) inclut une unité de mesure de tension (50) qui est adaptée pour mesurer une va-leur de tension fournie à l'unité CPU (12) et pour stocker la valeur de tension,
**caractérisé en ce que**
la première unité d'extrémité de terminaison (12) inclut une unité de mesure de tension (50) qui est adaptée pour mesurer une valeur de tension fournie à la première unité d'extrémité de terminaison (14) et stocker la valeur de tension, l'unité CPU (12) inclut en outre une unité de commande de surveillance de tension (60) qui est adap-tée pour exécuter un procédé d'obtention de valeur de tension de lecture de la valeur de tension stockée dans l'unité de mesure de tension (50) de la première unité d'extrémité de terminaison (14), de la première autre unité (13-1 à 13-4) ou de l'unité CPU (12) et déterminer si la valeur de tension est égale ou supé-rieure à une valeur spécifiée nécessaire pour entraî-ner chaque unité à partir de laquelle le système PLC (1) est configuré et qui est adaptée pour afficher un résultat du procédé d'obtention de valeur de tension sur une unité d'affichage (70) sous forme numérique, et
lorsque l'unité de commande de surveillance de tension (60) exécute le procédé d'obtention de va-leur de tension sur la première unité d'extrémité de terminaison (14), si une valeur de tension de la pre-mière unité d'extrémité de terminaison (14) est infé-rieure à la valeur spécifiée, l'unité de commande de surveillance de tension (60) est adaptée pour exécuter le procédé d'obtention de valeur de tension sur une unité dans l'ordre depuis la première unité d'extrémité de terminaison (14) vers le côté de l'unité d'alimentation en courant jusqu'à ce qu'une unité dont la valeur de tension est devenue égale ou supérieure à la valeur spécifiée soit identifiée.

2. Système PLC (1) selon la revendication 1, comprenant en outre un premier bloc d'extension (20) qui est électriquement relié au bloc de base (10) via un pre-mier câble d'extension (30), dans lequel
le bloc de base inclut en outre une première unité de branche (15) agencée entre l'unité d'alimentation en courant (11) et la première unité d'extrémité de terminaison (14),
le premier bloc d'extension (20) est tel qu'une première unité d'extension (21) reliée à la première unité de branche (15) du bloc de base via le premier câble d'extension, une deuxième unité d'extrémité de terminaison (23) agencée sur une extré-mité de terminaison par rapport à la première unité d'extension (21), et une deuxième autre unité (22-1 à 22-4) agencée entre la première unité d'extension (21) et la deuxième unité d'extrémité de terminaison (23) sont connectées via un connecteur,
la première unité d'extension (21), la deu-xième unité d'extrémité de terminaison (23) et la deu-xième autre unité (22-1 à 22-4) incluent chacune une unité de mesure de tension (50) qui est adaptée pour mesurer une valeur de tension fournie à une unité cor-respondante et pour stocker la valeur de tension,
dans le procédé d'obtention de valeur de ten-sion exécuté par l'unité de commande de surveillance de tension (60), l'unité de commande de surveillance de tension (60) est adaptée pour lire la valeur de tension stockée dans l'unité de mesure de tension (50) de la première unité d'extrémité de terminaison (14), de la première autre unité (13-1 à 13-4), de l'unité CPU (12), de la première unité d'extension (21), la deuxième unité d'extrémité de terminaison (23) ou de la deuxième autre unité (22-1 à 22-4) et pour détermi-ner si la valeur de tension est égale ou supérieure à une valeur spécifiée nécessaire pour entraîner chaque unité à partir de laquelle le système PLC (1) est con-figuré, et
l'unité de commande de surveillance de ten-sion (60) a en outre une fonction consistant à exécu-ter le procédé d'obtention de valeur de tension sur la deuxième unité d'extrémité de terminaison (23) et, si une valeur de tension de la deuxième unité d'extrémité de terminaison (23) est inférieure à la valeur spécifiée, exécuter le procédé d'obtention de valeur de tension sur une unité dans l'ordre depuis la deuxième unité d'extrémité de terminaison (23) vers le côté de la première unité d'extension jusqu'à ce qu'une unité dont la valeur de tension est devenue égale ou supé-rieure à la valeur spécifiée soit identifiée.

3. Système PLC (1) selon la revendication 2, comprenant en outre un second bloc d'extension qui est électri-quement relié au premier bloc d'extension (20) via un second câble d'extension, dans lequel
le premier bloc d'extension (20) inclut en outre une seconde unité de branche, le second bloc d'extension est tel qu'une se-conde unité d'extension reliée à la seconde unité de branche du premier bloc d'extension (20) via le second câble d'extension, une troisième unité d'extrémité de terminaison agencée sur une extrémité de terminaison par rapport à la seconde unité d'extension, et une troisième autre unité agencée entre la seconde unité d'extension et la troisième unité d'extrémité de ter-minaison sont connectées via un connecteur,
la seconde unité d'extension, la troisième unité d'extrémité de terminaison et la troisième autre unité incluent chacune une unité de mesure de tension (50) qui est adaptée pour mesurer une valeur de ten-sion fournie à une unité correspondante et pour stock-er la valeur de tension,
dans le procédé d'obtention de valeur de ten-sion exécuté par l'unité de commande de surveillance de tension (60), l'unité de commande de surveillance de tension (60) est adaptée pour lire la valeur de tension stockée dans l'unité de mesure de tension (50) de la première unité d'extrémité de terminaison, de la première autre unité (13-1 à 13-4), de l'unité CPU (12), de la première unité d'extension (21), de la deuxième unité d'extrémité de terminaison, de la deuxième autre unité (22-1 à 22-4), de la seconde unité d'extension, de la troisième unité d'extrémité de ter-minaison ou de la troisième autre unité, et pour déterminer si la valeur de tension est égale ou supé-rieure à une valeur spécifiée nécessaire pour entraî-ner chaque unité à partir de laquelle le système PLC (1) est configuré, et
l'unité de commande de surveillance de ten-sion (60) a en outre une fonction consistant à exécu-ter le procédé d'obtention de valeur de tension sur la troisième unité d'extrémité de terminaison et, si une valeur de tension de la troisième unité d'extrémité de terminaison est inférieure à la valeur spécifiée, exé-cuter le procédé d'obtention de valeur de tension sur une unité dans l'ordre depuis la troisième unité d'extrémité de terminaison vers le côté de la seconde unité de tension jusqu'à ce qu'une unité dont la va-leur de tension est devenue égale ou supérieure à la valeur spécifiée soit identifiée.

4. Système PLC (1) selon la revendication 1, dans lequel
l'unité de mesure de tension (50) est adaptée pour exécuter un procédé de mesure consistant à mesu-rer une valeur de tension fournie à chaque unité lors-qu'une alimentation du système PLC (1) est mise en marche, et
l'unité de commande de surveillance de ten-sion (60) est adaptée pour exécuter le procédé d'obtention de valeur de tension lorsque l'alimentation du système PLC (1) est mise en marche.

5. Système PLC (1) selon la revendication 1, dans lequel
l'unité de mesure de tension (50) est adaptée pour exécuter un procédé de mesure d'une valeur de tension fournie à chaque unité à un instant donné dans le temps, et
l'unité de commande de surveillance de ten-sion (60) est adaptée pour exécuter le procédé d'obtention de valeur de tension à un point donné quelconque dans le temps.

6. Système PLC (1) selon l'une quelconque des revendica-tions 1 à 5, dans lequel l'unité d'affichage est une unité d'affichage (70) reliée à l'unité CPU (12), un dispositif d'affichage (121) incorporé dans l'unité CPU (12), ou un dispositif d'affichage (40) relié à l'unité CPU (12) via un câble (41).
